# EUROPÄISCHE PATENTANMELDUNG

(11) **EP 3 400 838 A1**
(43) Veröffentlichungstag der Anmeldung: **14.11.2018**
(21) Anmeldenummer: 18166585.2
(22) Anmeldetag: 10.04.2018
(51) Int. Cl.: A47C 7/44, A47C 7/54, A47C 1/032, B29C 44/04, B29C 45/00

(54) **VERBINDUNGSANORDNUNG FÜR EINE RÜCKENLEHNE, BÜRO- ODER KONFERENZSITZMÖBEL UND VERFAHREN ZUR HERSTELLUNG EINER VERBINDUNGSANORDNUNG FÜR EINE RÜCKENLEHNE**

(30) Priorität: 08.05.2017 DE 102017207752
(71) Anmelder: Sedus Stoll AG, 79761 Waldshut-Tiengen (DE)
(72) Erfinder: Daur, Judith, 79761 Tiengen (DE); Buntru, Kurt, 79793 Eberfingen (DE); Fischer, Harry, 79793 Degernau (DE); Stenzel, Thomas, 79890 Brunnadern (DE)
(74) Vertreter: Isarpatent

(57) **Zusammenfassung**

Die vorliegende Erfindung betrifft eine Verbindungsanordnung für einen Rückenlehne, insbesondere eines Büro- oder Konferenzsitzmöbels, mit einem Sitzmöbelstrukturelement, mit einem Rückenlehnenstrukturelement, und mit einem elastomeren Verbindungsabschnitt, wobei der elastomere Verbindungsabschnitt direkt mit dem Sitzmöbelstrukturelement und mit dem Rückenlehnenstrukturelement verbunden, insbesondere fest verbunden, und derart ausgebildet ist, dass das Rückenlehnenstrukturelement relativ zu dem Sitzmöbelstrukturelement federelastisch beweglich ist. Die Erfindung betrifft ferner ein Büro- oder Konferenzsitzmöbel mit einer solchen Verbindungsanordnung sowie ein Verfahren zur Herstellung einer solchen Verbindungsanordnung.

## Beschreibung

### GEBIET DER ERFINDUNG

Die vorliegende Erfindung betrifft eine Verbindungsanordnung für eine Rückenlehne, insbesondere für ein Büro- oder Konferenzsitzmöbel, ein Büro- oder Konferenzsitzmöbel mit einer solchen Verbindungsanordnung sowie ein Verfahren zur Herstellung einer derartigen Verbindungsanordnung.

### TECHNISCHER HINTERGRUND

Bewegliche Lagerungen für Bürositzmöbelelemente existieren in den verschiedensten Ausführungsformen. Zur Anbindung einer Rückenlehne an ein Stuhlgestell werden besonders häufig Elastomer-Lager eingesetzt, welche in der Regel als ein Metall-Elastomer-Verbundbauteil ausgebildet sind.

Die mit derartigen Lagern, welche oftmals als dorsokinetisch flexible Gelenke bezeichnet werden, angebundenen Rückenlehnen werden zumeist als dorsokinetische Rückenlehnen bezeichnet. Diese Art von Rückenlehne macht insbesondere Dreh-, Seitwärts- und Rückenbewegungen unterstützend mit.

Ein Elastomer-Lager für eine dorsokinetische Rückenlehne ist beispielsweise in der Deutschen Patentanmeldung 10 2012 214642 A1 beschrieben. Demnach sind eine Grundplatte, ein Gegenflansch und ein fest mit der Grundplatte und dem Gegenflansch verbundener Elastomerkörper sowie eine an der Grundplatte befestigte Kragenmuffe vorgesehen, welche den Elastomerkörper und den Gegenflansch zumindest abschnittsweise umhüllt.

Derartige dorsokinetische Lager bedürfen jedoch eines relativ aufwändigen Herstellungsprozesses, insbesondere der Herstellung mit einer Mehrzahl von Form- oder Ziehteilen als Verbindungsteile zur Sitz- und Lehnenstruktur.

### ZUSAMMENFASSUNG DER ERFINDUNG

Vor diesem Hintergrund liegt der vorliegenden Erfindung die Aufgabe zugrunde, eine verbesserte bewegliche Verbindungsanordnung für eine Rückenlehne anzugeben.

Erfindungsgemäß wird diese Aufgabe durch eine Verbindungsanordnung mit den Merkmalen des Patentanspruchs 1 und/oder ein Büro- oder Konferenzsitzmöbel mit den Merkmalen des Patentanspruchs 10 und/oder durch ein Verfahren mit den Merkmalen des Patentanspruchs 12 gelöst.

Demgemäß ist vorgesehen:
- Eine Verbindungsanordnung für eine Rückenlehne, insbesondere eines Büro- oder Konferenzsitzmöbels, mit einem Sitzmöbelstrukturelement, mit einem Rückenlehnenstrukturelement, und mit einem elastomeren Verbindungsabschnitt, wobei der elastomere Verbindungsabschnitt direkt mit dem Sitzmöbelstrukturelement und mit dem Rückenlehnenstrukturelement verbunden und derart ausgebildet ist, dass das Rückenlehnenstrukturelement relativ zu dem Sitzmöbelstrukturelement federelastisch beweglich ist.
- Ein Büro- oder Konferenzsitzmöbel, mit einem Sitzträger, mit einer Rückenlehne, mit einer Verbindungsanordnung gemäß einem der vorstehenden Ansprüche, wobei der Sitzträger mit dem Sitzmöbelstrukturelement gekoppelt ist und das Rückenlehnenstrukturelement einen tragenden Teil der Rückenlehne bildet.
- Ein Verfahren zur Herstellung einer Verbindungsanordnung für eine Rückenlehne, insbesondere einer erfindungsgemäßen Verbindungsanordnung, mit den Schritten: Formen eines Sitzmöbelstrukturelements und eines Rückenlehnenstrukturelements; und Formen eines elastomeren Verbindungsabschnitts direkt an das Sitzmöbelstrukturelement und das Rückenlehnenstrukturelement zur federelastischen Verbindung des Sitzmöbelstrukturelements mit dem Rückenlehnenstrukturelement.

Die der vorliegenden Erfindung zugrunde liegende Idee besteht darin, ein Sitzmöbelstrukturelement mit einem Rückenlehnenstrukturelement durch einen direkt daran an geformten oder direkt damit verbundenen elastomeren Verbindungsabschnitt federelastisch zu verbinden. Die Verbindung des elastomeren Verbindungsabschnitts mit dem Sitzmöbelstrukturelement und dem Rückenlehnenstrukturelement ist jeweils vorzugsweise fest, insbesondere stoffschlüssig vorgesehen. Somit wird eine ergonomisch vorteilhafte Beweglichkeit, vorzugsweise dorsokinetische Beweglichkeit, einer Rückenlehne bereitgestellt, welche sehr einfach herzustellen ist.

Der elastomere Verbindungsabschnitt kann dazu unterschiedlichste elastomere Werkstoffe enthalten, beispielsweise Gummi, thermoplastisches Polyurethan (TPU) und/oder andere thermoplastische Elastomere (TPE).

Die erfindungsgemäße Verbindungsanordnung wird vorzugsweise in einem gemeinsamen Fertigungsschritt durch gemeinsames Formen, beispielsweise durch Zwei-Komponenten-Spritzgießen, des Sitzmöbelstrukturelements des Rückenlehnenstrukturelements und des elastomeren Verbindungsabschnitts hergestellt.

Somit ist nur ein einzelner gemeinsamer Herstellungsschritt ohne zusätzliche Verbindungsschritte nötig.

Denkbar wäre jedoch auch, zunächst das Sitzmöbelstrukturelement und das Rückenlehnenstrukturelement zu formen und in einem separaten Schritt den elastomeren Verbindungsabschnitt daran anzuformen. Somit ist eine gemeinsame Herstellung und Verbindung des elastomeren Verbindungsabschnitt ermöglicht.

Erfindungsgemäß kann nunmehr auf ein zusätzliches dorsokinetisches Lager verzichtet und dessen Vielzahl an Teilen und aufwändige Herstellung vermieden werden, was vorteilhaft die Herstellung vereinfacht.

Zudem werden somit Vormontageschritte eingespart.

Ferner wird auch für die Endmontage die Teileanzahl eines Büro- oder Konferenzsitzmöbels reduziert und so auch die Montage eines Büro- oder Konferenzsitzmöbels vereinfacht.

Insgesamt ist somit eine wirtschaftlich und ergonomisch vorteilhafte Verbindungsanordnung für eine Rückenlehne geschaffen, welche eine Lehnenbewegbarkeit, insbesondere eine Dorsokinetik, realisiert.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer Ausführungsform sind zwei elastomere Verbindungsabschnitte vorgesehen, welche jeweils an unterschiedlichen Seiten des Rückenlehnenstrukturelements angeordnet und mit dem Sitzmöbelstrukturelement verbunden sind. Somit ist ein Rückenlehnenstrukturelement, beispielsweise ein Lehnenrahmen, dezentral durch zwei elastische Verbindungselemente beispielsweise links und rechts mit dem einem Sitzmöbelstrukturelement, beispielsweise einem Lehnenträger, verbunden. Vorteilhaft eröffnet dies neue Wege bei der Konstruktion ergonomischer Sitzmöbel.

Gemäß einer weiteren Ausführungsform ist das Sitzmöbelstrukturelement als Armlehnenträger ausgebildet. Der Armlehnenträger bildet somit gleichzeitig einen Lehnenträger aus. Auf dieser Weise wird eine Funktionsintegration erreicht, da kein separater Lehnenträger mehr nötig ist. Ferner sind somit neuartige Konstruktionen möglich, wobei insbesondere der Armlehnenträger auch als Teil einer üblicherweise in einem Bürositzmöbel vorgesehenen Synchronmechanik 8 ausgebildet ist. In diesem Fall ist somit kein herkömmlicher Rückenlehnenträger als Teil einer Synchronmechanik vorgesehen, sondern durch eine Funktionsintegration mit dem Armlehnenträger ersetzt.

Gemäß einer Weiterbildung ist der Armlehnenträger gabelartig mit zwei Gabelarmen ausgebildet, wobei je ein Gabelarm über einen elastomeren Verbindungsabschnitt mit einer Seite des Rückenlehnenstrukturelements verbunden ist. Somit ist das Design sehr schlank und der Übergang zur Armlehne vorteilhaft gestaltet. Ferner ist somit eine neuartige Konstruktion eines ergonomischen Sitzmöbels bereitgestellt.

Bei einer Ausführungsform ist das Sitzmöbelstrukturelement als Teil einer Synchronmechanik ausgebildet. Dazu bildet ein der Rückenlehne abgewandtes Ende des Sitzmöbelstrukturelements beispielsweise einen Lenker der Synchronmechanik. Auf diese Weise ist die dorsokinetische Funktion des elastomeren Verbindungsabschnitts mit der Funktion einer Synchronmechanik kombiniert.

Bei einer weiteren Ausführungsform ist das Sitzmöbelstrukturelement als Rückenlehnenträger ausgebildet. Der Rückenlehnenträger bildet dabei einen Lenker der Synchronmechanik. Vorteilhaft kann der Rückenlehnenträger somit an seinem der Rückenlehne abgewandten Ende in herkömmlicher Weise mit einer Synchronmechanik gekoppelt sein.

Bei einer vorteilhaften Weiterbildung ist dabei der elastomere Verbindungsabschnitt an einem oberen Ende des Rückenlehnenträgers angeordnet. Somit ist ein zentraler Lehnenträger mit dem Rückenlehnenstrukturelement, beispielsweise Lehnenrahmen, durch ein elastisches Material verbunden und lässt die gewünschte Bewegungsfreiheit der Rückenlehne analog zu einer Dorsokinetik zu.

Gemäß einer Ausführungsform umgibt der elastomere Verbindungsabschnitt zumindest teilweise das obere Ende des Rückenlehnenträgers in zumindest einer Ebene. Vorteilhaft ist somit ein fließender Übergang zwischen Rückenlehne und Rückenlehnenträger geschaffen.

Bei einer Weiterbildung weist der Rückenlehnenträger zwei Stege auf, welche an dem oberen Ende des Rückenlehnenträgers U-förmig zusammenlaufen. Der elastomere Verbindungsabschnitt umgibt die U-Form dabei außen. Auf diese Weise fügt sich der elastomere Verbindungsabschnitt in die Form des Rückenlehnenträgers ein und ist zudem mechanisch günstig um die U-Form umlaufend zur Aufnahme von auf die Rückenlehne wirkenden Momenten angeordnet.

Alternativ oder zusätzlich wäre es auch denkbar, den elastomeren Verbindungsabschnitt derart auszubilden, dass er die U-Form innen umgibt oder ausfüllt. In diesem Fall ist vorteilhaft eine sehr schlanke und kompakte Bauweise bereitgestellt.

Gemäß einer Ausführungsform eines Büro- oder Konferenzsitzmöbels ist das Rückenlehnenstrukturelement als Rückenlehnenrahmen ausgebildet. Gemäß einer vorteilhaften Weiterbildung ist der Rückenlehnenrahmen umlaufend ausgebildet. Somit lässt sich eine tragende Anbindung mit dem elastomeren Verbindungsabschnitt bei geringem Gewicht realisieren.

Bei einer Ausführungsform kann der Lehnenrahmen beispielsweise mit einem Bezug, insbesondere mit einem Netzbezug, bespannt sein. Alternativ oder zusätzlich kann jedoch selbstverständlich auch ein Polster vorgesehen sein.

Gemäß einer Ausführungsform eines Verfahrens zum Herstellen einer Verbindungsanordnung für eine Rückenlehne werden zunächst in einem gemeinsamen Werkzeug das Sitzmöbelstrukturelement und das Rückenlehnenstrukturelement geformt. Anschließend wird dann in dem gemeinsamen Werkzeug der elastomere Verbindungsabschnitt geformt. Vorteilhaft sind somit keinerlei Zwischenschritte nötig. Stattdessen kann direkt nach dem zumindest teilweisen Erstarren des Sitzmöbelstrukturelements und des Rückenlehnenstrukturelements der elastomere Verbindungsabschnitt daran angeformt und so die federelastische Verbindung hergestellt werden.

Gemäß einer Weiterbildung werden zunächst das Sitzmöbelstrukturelement und das Rückenlehnenstrukturelement spritzgegossen. Insbesondere wird dazu ein gleiches, im erstarrten Zustand festes Material eingesetzt. Anschließend wird der elastomere Verbindungsabschnitt mit einem elastomeren Material daran angespritzt. Dies erfolgt vorzugsweise ebenfalls in der gemeinsamen Form. Somit wird die Herstellung des elastomeren Verbindungsabschnitts und dessen Verbindung mit dem Sitzmöbelstrukturelement und dem Rückenlehnenstrukturelement in einem gemeinsamen Schritt vorgenommen.

Gemäß einer Weiterbildung des Verfahrens werden zwei elastomere Verbindungsabschnitte in einem Fertigungsschritt geformt, wobei jeweils einer der elastomeren Verbindungsabschnitte an einer Seite des Rückenlehnenstrukturelements angeformt wird. Dementsprechend wird ein erster Verbindungsabschnitt an einer ersten Seite und ein zweiter Verbindungsabschnitt an einer zweiten Seite des Rückenlehnenstrukturteils angeformt. Somit werden zwei elastische Verbindungsabschnitte, beispielsweise links und rechts an einem Rückenlehnenrahmen, geformt. Somit wird eine zweiseitige Verbindung des Sitzmöbelstrukturelements und des Rückenlehnenstrukturteils hergestellt.

Die obigen Ausgestaltungen und Weiterbildungen lassen sich, sofern sinnvoll, beliebig miteinander kombinieren. Insbesondere sind sämtliche Merkmale der Verbindungsanordnung auf das Verfahren zur Herstellung der Verbindungsanordnung übertragbar, und umgekehrt. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine perspektivische Darstellung eines Bürositzmöbels mit einer Verbindungsanordnung gemäß einer ersten Ausführungsform;
- Fig. 2: das Bürositzmöbel gemäß Fig. 1 in einer Rückseitenansicht;
- Fig. 3: eine perspektivische Darstellung eines Bürositzmöbels mit einer Verbindungsanordnung gemäß einer zweiten Ausführungsform; und
- Fig. 4: das Bürositzmöbel gemäß Fig. 3 in einer Rückseitenansicht.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

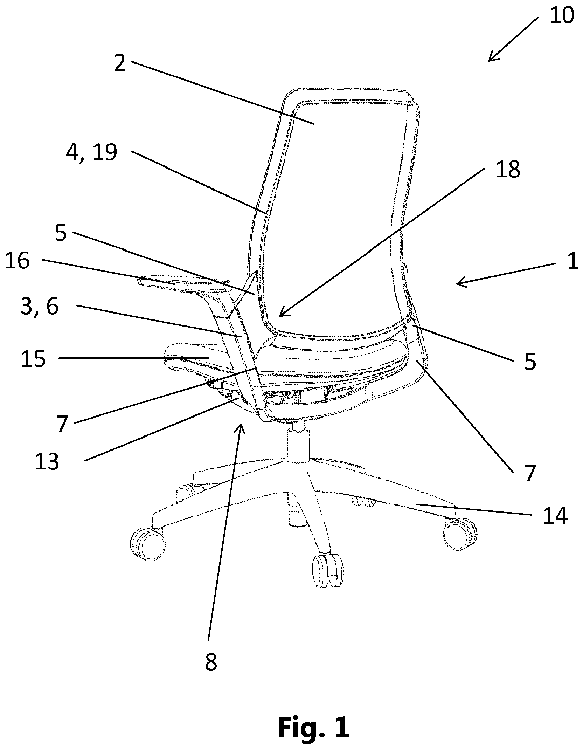

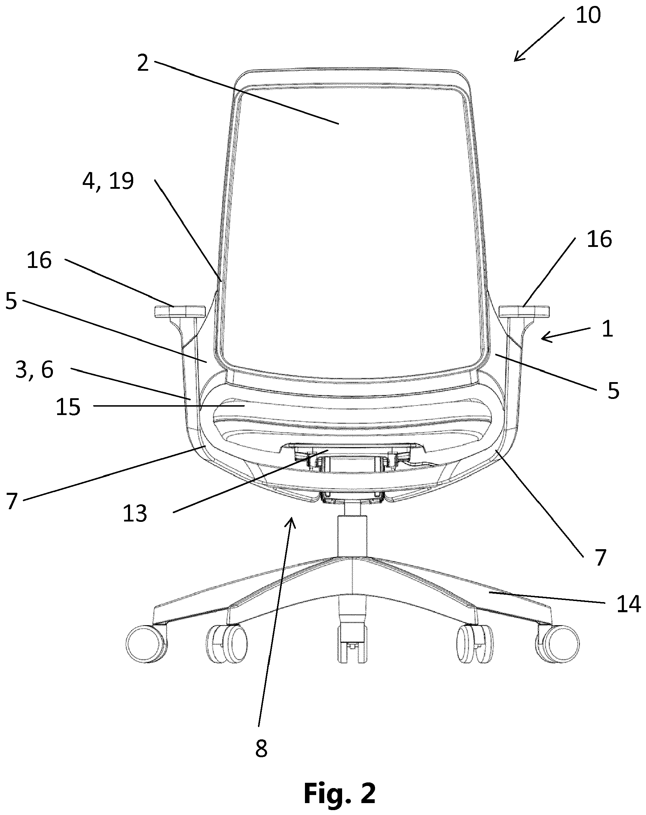

Fig. 1 zeigt eine perspektivische Darstellung eines Bürositzmöbels mit einer Verbindungsanordnung gemäß einer ersten Ausführungsform. Fig. 2 zeigt das Bürositzmöbel gemäß Fig. 1 in einer Rückseitenansicht.

Das Bürositzmöbel 10 weist einen Fuß 14, einem Sitzträger 13, eine Sitzfläche 15 sowie eine Rückenlehne 2 auf.

Das Bürositzmöbel unterscheidet sich von einem Konferenzsitzmöbel im Wesentlichen durch den Fuß 14, welche hier als Drehfuß mit Rollen ausgebildet ist. Bei einem Konferenzsitzmöbel kann es sich beispielsweise um einen Drehfuß ohne Rollen, einen Schwingfuß oder auch um einen anderen Fuß handeln. Sämtliche im Folgenden in Bezug auf ein Bürositzmöbel dargestellten Merkmale sind somit in gleicher Weise auf ein Konferenzsitzmöbel übertragbar.

Das Bürositzmöbel 10 ist hier als Bürodrehstuhl ausgebildet und weist weiterhin eine erfindungsgemäße Verbindungsanordnung 1 auf.

Die Verbindungsanordnung 1 ist mit einem Sitzmöbelstrukturelement 3, mit einem Rückenlehnenstrukturelement 4, und mit einem elastomeren Verbindungsabschnitt 5 gebildet. Der elastomere Verbindungsabschnitt 5 ist direkt mit dem Sitzmöbelstrukturelement 3 und mit dem Rückenlehnenstrukturelement 4 verbunden. Durch die Elastizität des elastomeren Materials des elastomeren Verbindungsabschnitts 5 ist das Rückenlehnenstrukturelement 4 relativ zu dem Sitzmöbelstrukturelement 3 federelastisch beweglich.

Der Sitzträger 13 ist mit dem Sitzmöbelstrukturelement 3 gekoppelt. Das Rückenlehnenstrukturelement 4 bildet ferner einen tragenden Teil der Rückenlehne 2, hier beispielhaft einen Rückenlehnenrahmen.

Bei der hier dargestellten Ausführungsform der Verbindungsanordnung sind zwei elastomere Verbindungsabschnitte 5 vorgesehen, welche jeweils seitlich an unterschiedlichen Seiten des Rückenlehnenstrukturelements, hier links und rechts daran 4 angeordnet und mit dem Sitzmöbelstrukturelement 3 verbunden sind. Die Verbindung ist hier jeweils durch Stoffschluss realisiert, da der elastomere Verbindungsabschnitt 5 an die Strukturelemente 3, 4 direkt angeformt wird, worauf weiter unten noch näher eingegangen wird.

Damit eine seitliche Befestigung realisiert werden kann, ist das Sitzmöbelstrukturelement 3 hier als Armlehnenträger 6 ausgebildet. Der Armlehnenträger 6 ist dementsprechend gabelartig mit zwei Gabelarmen 7 ausgebildet, wobei je ein Gabelarm 7 über einen elastomeren Verbindungsabschnitt 5 mit einer Seite des Rückenlehnenstrukturelements 4 verbunden ist. Der Armlehnenträger 6 übernimmt hier somit zusätzlich zur Halterung der Armlehnen die mechanische Aufgabe eines Lehnenträgers. Es handelt sich somit um einen dezentralen Lehnenträger.

Bei dem Rückenlehnenstrukturelement 4 handelt es sich hier beispielhaft um einen Rückenlehnenrahmen 19. Der Rückenlehnenrahmen 19 ist hier somit dezentral durch zwei elastische Verbindungselemente links und rechts mit dem Lehnenträger bzw. Armlehnenträger 6 verbunden, sodass eine Bewegungsfreiheit der Rückenlehne 2 ermöglicht wird.

Der elastomere Verbindungsabschnitt 5 ist bei der dargestellten Ausführungsform beispielhaft massiv ausgeführt und an die Kontur des Rückenlehnenstrukturelements 4 und der Armlehnenträger 6 stoffschlüssig angeformt. Am Armlehnenträger 6 ist der elastomeren Verbindungsabschnitt 5 an einer Innenseite angeformt. Er ist dabei mit einem Bereich des Armlehnenträgers 6 stoffschlüssig verbunden, welcher sich nach oben über die Sitzfläche 15 hinaus erstreckt. Am Rückenlehnenrahmen 19 ist der elastomere Verbindungsabschnitt 5 in einem unteren seitlichen Bereich angeformt und überdeckt dabei einen Eckbereich 18 des Rückenlehnenrahmens 19.

An seinen äußeren Kanten ist der elastomeren Verbindungsabschnitt 5 im Bereich eines Übergangs zu dem Rückenlehnenrahmen 19 jeweils mit sich verjüngen der Materialstärke auslaufend ausgebildet. Auf diese Weise gehen eine seitliche bzw. vertikale Kante des Rückenlehnenrahmens 19 und auch eine untere bzw. horizontale Kante des Rückenlehnenrahmens 19 direkt in den elastomeren Verbindungsabschnitt 5 über. Insbesondere wird auf diese Weise eine umlaufenden Kontur der Innenseite des Lehnenträgers 6, des elastomeren Verbindungsabschnitts 5 und der unteren Kante des Rückenlehnenrahmens 19 geschaffen.

In Anschluss an den elastomeren Verbindungsabschnitt erstrecken sich Armlehnen 16 aus den Gabelarmen 7. Diese Armlehnen 16 können an den Gabelarmen 7 mit Befestigungsmitteln, insbesondere Rastmitteln, vorzugsweise höhenverstellbaren Rastmitteln, angebracht sein.

Bei weiteren Ausführungsformen kann auch eine integrale Ausbildung der Armlehnen 16 mit den Gabelarmen 7 vorgesehen sein.

Bei dieser Ausführungsform verbindet der Armlehnenträger 6 die Rückenlehne 2 mit dem Sitzträger 13. Dementsprechend ist der Armlehnenträger 6 hier auch als Teil einer üblicherweise in einem Bürositzmöbel vorgesehenen Synchronmechanik 8 ausgebildet. Dazu ist ein der Gabel 7 bzw. den Armlehnen 16 abgewandtes Ende des Armlehnenträgers 6 mit der Synchronmechanik 8 des Sitzträgers 13 gekoppelt, in der Weise wie dies üblicherweise bei einem als Lenker einer Synchronmechanik ausgebildeten Rückenlehnenträger der Fall ist.

Allerdings sind, insbesondere für Konferenzsitzmöbel, auch weitere Ausführungsformen ohne Synchronmechanik denkbar. In diesem Falle wäre dann der Armlehnenträger 6 fest an dem Sitzträger 13 angebracht.

Hergestellt wird eine derartige Verbindungsanordnung 1 für eine Rückenlehne 2 dadurch, dass zunächst ein Sitzmöbelstrukturelement 3, hier die Armlehnenträger 6, und ein Rückenlehnenstrukturelement 4, hier der Rückenlehnenrahmen 19, geformt werden und anschließend ein elastomerer Verbindungsabschnitt 5, hier beidseitig, direkt an das Sitzmöbelstrukturelement 3 und das Rückenlehnenstrukturelement 4 angeformt wird. Auf diese Weise wird eine federelastische stoffschlüssige Verbindung des Armlehnenträgers 6 mit dem Rückenlehnenrahmen 19 über den elastomeren Verbindungsabschnitt 5 hergestellt.

Vorzugsweise erfolgt die Herstellung in einem gemeinsamen Werkzeug, wobei zunächst das Sitzmöbelstrukturelement 3, hier die Armlehnenträger 6, und das Rückenlehnenstrukturelement 4, hier der Rückenlehnenrahmen 19, in dem gemeinsamen Werkzeug geformt werden. Beispielsweise werden sie dazu mit einem gleichen, im erstarrten Zustand festen Material, spritzgegossen. Anschließend wird in dem gemeinsamen Werkzeug der elastomere Verbindungsabschnitt 5 geformt. Dieser wird dazu in der gemeinsamen Form mit einem elastomeren Material an das teilweise oder ganz erstarrte als Armlehnenträger 6 ausgebildete Sitzmöbelstrukturelement 3 und an das teilweise oder ganz erstarrte als Rückenlehnenrahmen 19 ausgebildete Rückenlehnenstrukturelement 4 angespritzt.

Da bei der vorliegenden Ausführungsform zwei elastomere Verbindungsabschnitte 5 vorgesehen sind, werden beide Verbindungsabschnitte 5 in diesem Schritt geformt. Somit wird jeweils einer der elastomeren Verbindungsabschnitte 5 an einer Seite des als Rückenlehnenrahmen 19 ausgebildeten Rückenlehnenstrukturelements 4 angeformt. Gleichzeitig wird der der elastomere Verbindungsabschnitt 5 an dem zugehörigen Armlehnenträger 6 angeformt. Es entsteht somit eine stoffschlüssige elastische Verbindung zwischen dem Rückenlehnenrahmen 19 und dem Armlehnenträger 6.

Somit können durch die Technologie des Zwei-Komponenten-Spritzgusses der Rückenlehnenrahmen 19 und der Armlehnenträger 6 durch zwei elastomere Verbindungsabschnitte 5,z.B. aus Gummi, thermoplastischem Polyurethan (TPU) und/oder anderen thermoplastischen Elastomeren (TPE), in einem Fertigungsschritt miteinander verbunden werden. Auf diese Weise wird der Fertigungs- und spätere Montageaufwand auf ein Minimum reduziert.

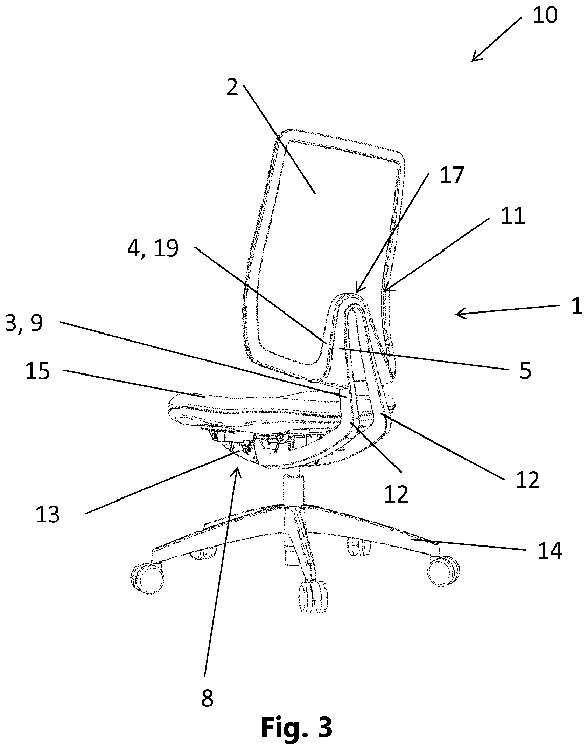

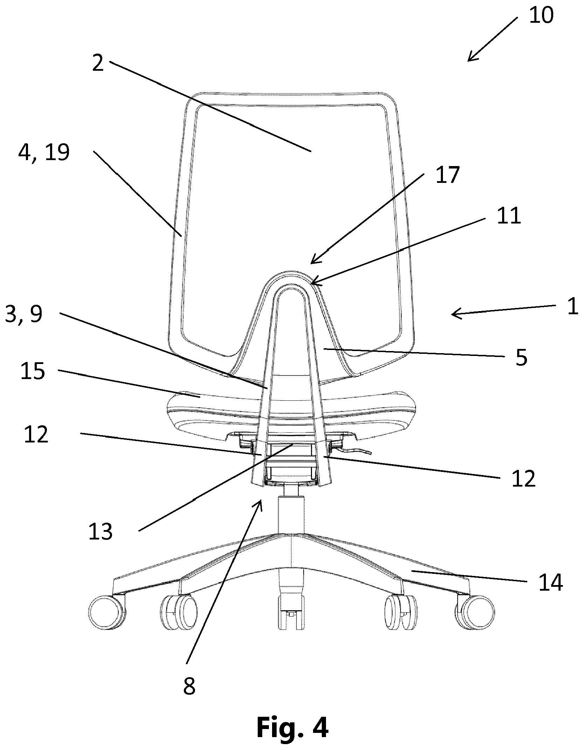

Fig. 3 zeigt eine perspektivische Darstellung eines Bürositzmöbels 10 mit einer Verbindungsanordnung 1 gemäß einer zweiten Ausführungsform. Fig. 4 zeigt das Bürositzmöbel 10 gemäß Fig. 3 in einer Rückseitenansicht.

Diese Ausführungsform unterscheidet sich von der zuvor beschriebenen Ausführungsform dadurch, dass das Sitzmöbelstrukturelement 3 hier als Rückenlehnenträger 9 ausgebildet ist. Es handelt sich dabei somit um einen zentralen Lehnenträger, der sich mittig vom Sitzträger 13 zur Rückenlehne 2 erstreckt. Der elastomere Verbindungsabschnitt 5 ist dabei an einem oberen Ende 11 des Rückenlehnenträgers 9 angeordnet. Beispielhaft umgibt der elastomere Verbindungsabschnitt 5 bei der dargestellten Ausführungsform das obere Ende 11 des Rückenlehnenträgers 9.

Das Rückenlehnenstrukturelement 4 ist wiederum als umlaufender Rückenlehnenrahmen 19 ausgebildet. Der Rückenlehnenrahmen 19 weist in einem Anschlussbereich eine Ausbuchtung 17 auf, in welche sich der Rückenlehnenträger 9 erstreckt. Ein Zwischenraum zwischen dem Rückenlehnenrahmen 19 im Bereich der Ausbuchtung 17 und dem oberen Ende 11 des Rückenlehnenträgers ist durch den elastomeren Verbindungsabschnitt 5 ausgefüllt. Das elastomere Material lässt somit eine Bewegungsfreiheit der Rückenlehne 2 relativ zum Rückenlehnenträger 9 analog zu einer Dorsokinetik zu.

Der Rückenlehnenträger 9 weist hier beispielhaft zwei Stege 12 auf, welche an dem oberen Ende 11 des Rückenlehnenträgers in einer U-Form zusammenlaufen, wobei der elastomere Verbindungsabschnitt 5 die U-Form außen, d. h. in der Ebene der Stege 12, umgibt. Der elastomere Verbindungsabschnitt 5 erstreckt sich in diesem Fall somit ebenfalls U-förmig um das obere Ende 11 des Rückenlehnenträgers 9.

An seinem anderen Ende ist der Rückenlehnenträger 9 in üblicher Weise als Teil einer Synchronmechanik 8 ausgebildet.

Hergestellt wird eine derartige Verbindungsanordnung 1 für eine Rückenlehne 2 dadurch, dass zunächst der Rückenlehnenträger 9 und der Rückenlehnenrahmen 19 geformt werden und anschließend der elastomere Verbindungsabschnitt 5, hier in den U-förmigen Zwischenraum zwischen Rückenlehnenträger und der Ausbuchtung 17 des Rückenlehnenrahmens 19, angeformt wird. Auf diese Weise wird eine federelastische stoffschlüssige Verbindung des Sitzmöbelstrukturelements 3 mit dem Rückenlehnenstrukturelement 4 über den elastomeren Verbindungsabschnitt 5 hergestellt.

Auch hier erfolgt die Herstellung vorzugsweise in einem gemeinsamen Werkzeug, wobei zunächst der Rückenlehnenträger 9 und der Rückenlehnenrahmen 19 in dem gemeinsamen Werkzeug geformt werden. Beispielsweise werden sie dazu mit einem gleichen, im erstarrten Zustand festen Material, spritzgegossen. Anschließend wird in dem gemeinsamen Werkzeug der elastomere Verbindungsabschnitt 5 geformt. Dieser wird dazu in der gemeinsamen Form mit einem elastomeren Material an den teilweise oder ganz erstarrten Rückenlehnenträger 9 und an den teilweise oder ganz erstarrten Rückenlehnenrahmen 19 angespritzt.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

### Bezugszeichenliste

- 1: Verbindungsanordnung
- 2: Rückenlehne
- 3: Sitzmöbelstrukturelement
- 4: Sitzmöbelstrukturelement
- 5: elastomerer Verbindungsabschnitt
- 6: Armlehnenträger
- 7: Gabelarm
- 8: Synchronmechanik
- 9: Rückenlehnenträger
- 10: Büro- oder Konferenzsitzmöbel
- 11: oberes Ende
- 12: Steg
- 13: Sitzträger
- 14: Fuß
- 15: Sitzfläche
- 16: Armlehne
- 17: Ausbuchtung
- 18: Eckbereich

## Patentansprüche

1. Verbindungsanordnung (1) für eine Rückenlehne (2), insbesondere eines Büro- oder Konferenzsitzmöbels (10),
mit einem Sitzmöbelstrukturelement (3),
mit einem Rückenlehnenstrukturelement (4), und
mit einem elastomeren Verbindungsabschnitt (5), wobei der elastomere Verbindungsabschnitt (5) direkt mit dem Sitzmöbelstrukturelement (3) und mit dem Rückenlehnenstrukturelement (4) verbunden und derart ausgebildet ist, dass das Rückenlehnenstrukturelement (4) relativ zu dem Sitzmöbelstrukturelement (3) federelastisch beweglich ist.

2. Verbindungsanordnung nach Anspruch 1,
**dadurch gekennzeichnet,**
**dass** zwei elastomere Verbindungsabschnitte (5) vorgesehen sind, welche jeweils an unterschiedlichen Seiten des Rückenlehnenstrukturelements (4) angeordnet und mit dem Sitzmöbelstrukturelement (3) verbunden sind.

3. Verbindungsanordnung nach einem der vorstehenden Ansprüche,
**dadurch gekennzeichnet,**
**dass** das Sitzmöbelstrukturelement (3) als Armlehnenträger (6) ausgebildet ist.

4. Verbindungsanordnung nach Anspruch 3,
**dadurch gekennzeichnet,**
**dass** der Armlehnenträger (6) gabelartig mit zwei Gabelarmen (7) ausgebildet ist, wobei je ein Gabelarm (7) über einen elastomeren Verbindungsabschnitt(5) mit einer Seite des Rückenlehnenstrukturelements (4) verbunden ist.

5. Verbindungsanordnung nach einem der vorstehenden Ansprüche,
**dadurch gekennzeichnet,**
**dass** das Sitzmöbelstrukturelement (3) als Teil einer Synchronmechanik (8) ausgebildet ist.

6. Verbindungsanordnung nach Anspruch 1,
**dadurch gekennzeichnet,**
**dass** das Sitzmöbelstrukturelement (3) als Rückenlehnenträger (9) ausgebildet ist.

7. Verbindungsanordnung nach Anspruch 6,
**dadurch gekennzeichnet,**
**dass** der elastomere Verbindungsabschnitt (5) an einem oberen Ende (11) des Rückenlehnenträgers (9) angeordnet ist.

8. Verbindungsanordnung nach Anspruch 7,
**dadurch gekennzeichnet,**
**dass** der elastomere Verbindungsabschnitt (5) das obere Ende (11) des Rückenlehnenträgers (9) in zumindest einer Ebene zumindest teilweise umgibt.

9. Verbindungsanordnung nach Anspruch 8,
**dadurch gekennzeichnet,**
**dass** der Rückenlehnenträger (9) zwei Stege (12) aufweist, welche an dem oberen Ende (11) des Rückenlehnenträgers in einer U-Form zusammenlaufen, wobei der elastomere Verbindungsabschnitt (5) die U-Form außen umgibt.

10. Büro- oder Konferenzsitzmöbel (10),
mit einem Sitzträger (13),
mit einer Rückenlehne (2),
mit einer Verbindungsanordnung (1) gemäß einem der vorstehenden Ansprüche,
wobei der Sitzträger (13) mit dem Sitzmöbelstrukturelement (3) gekoppelt ist und das Rückenlehnenstrukturelement (4) einen tragenden Teil der Rückenlehne (2) bildet.

11. Büro- oder Konferenzsitzmöbel nach Anspruch 10,
**dadurch gekennzeichnet,**
**dass** das Rückenlehnenstrukturelement (4) als Rückenlehnenrahmen (19) ausgebildet ist.

12. Verfahren zur Herstellung einer Verbindungsanordnung (1) für eine Rückenlehne (2), insbesondere einer Verbindungsanordnung nach einem der Ansprüche 1 bis 9, mit den Schritten:
Formen eines Sitzmöbelstrukturelements (3) und eines Rückenlehnenstrukturelements (4); und
Formen eines elastomeren Verbindungsabschnitts (5) direkt an das Sitzmöbelstrukturelement (3) und das Rückenlehnenstrukturelement (4) zur federelastischen Verbindung des Sitzmöbelstrukturelements (3) mit dem Rückenlehnenstrukturelement (4) .

13. Verfahren nach Anspruch 12,
**dadurch gekennzeichnet,**
**dass** in einem gemeinsamen Werkzeug zunächst das Sitzmöbelstrukturelement (3) und das Rückenlehnenstrukturelement (4) geformt werden und anschließend in dem gemeinsamen Werkzeug der elastomere Verbindungsabschnitt (5) geformt wird.

14. Verfahren nach Anspruch 13,
**dadurch gekennzeichnet,**
**dass** zunächst das Sitzmöbelstrukturelement (3) und das Rückenlehnenstrukturelement (4) mit einem gleichen, im erstarrten Zustand festen Material, spritzgegossen werden und anschließend der elastomere Verbindungsabschnitt (5) mit einem elastomeren Material daran angespritzt wird.

15. Verfahren nach einem der Ansprüche 12 bis 14,
**dadurch gekennzeichnet,**
**dass** zwei elastomere Verbindungsabschnitte (5) geformt werden, wobei jeweils einer der elastomeren Verbindungsabschnitte (5) an einer Seite des Rückenlehnenstrukturelements (4) angeformt wird.
